# EUROPÄISCHE PATENTSCHRIFT

(11) **EP 1 595 761 B1**
(45) Veröffentlichungstag und Bekanntmachung des Hinweises auf die Patenterteilung: **29.11.2006**
(21) Anmeldenummer: 05003612.8
(22) Anmeldetag: 19.02.2005
(51) Int. Cl.: B60S 9/08

(54) **Höhenverstellbare Stütze für Sattelauflieger oder dergleichen**
Height adjustable support for semitrailers or the like
Support reglable en hauter pour semi-remorque ou systeme similaire

(30) Priorität: 11.05.2004 DE 102004023749
(43) Veröffentlichungstag der Anmeldung: 16.11.2005
(73) Patentinhaber: Georg Fischer Verkehrstechnik GmbH, 78224 Singen (DE)
(72) Erfinder: Riedl, Reinhold, 63897 Miltenberg (DE)
(74) Vertreter: Weiss, Wolfgang

(56) Entgegenhaltungen:
- EP-A- 1 350 701
- DE-U1- 8 813 558

## Beschreibung

Die Erfindung bezieht sich auf eine höhenverstellbare Stütze für Sattelauflieger oder dergleichen gemäß dem Oberbegriff des Anspruchs 1. Derartige Stützen sind in meist paarweiser Anordnung am vorderen Bereich des Sattelaufliegers angeordnet.

Eine gattungsgemäße Stütze ist aus dem Dokument DE-8813558U bekannt. Eine gattungsgemäße sogenannte Absattelstütze S 2000 ist aus dem Prospekt 098060 der Firma haacon, D-97896 Freudenberg, zu ersehen.

Dabei besteht der Stützenaußenrohrkörper, in dem das Stützeninnenrohr quadratischen Querschnitts geführt und abgestützt wird, aus einem querschnittsmäßig u-förmigen Längsprofil, dessen Schenkelstirnseiten mit einer etwa gleichlangen durchgehenden und beidseitig überstehenden Anschraubplatte verschweißt sind.

Bei dieser Konzeption müssen die entstehenden Biegekräfte und vor allem die enormen Schubkräfte, die beim Abtragen der Stützlast auftreten fast ausschließlich im Kraftfluss über die Schweißnähte zunächst in die Anschraubplatte übertragen werden, bevor diese über die Schraubverbindung in das Chassis des Sattelaufliegers eingeleitet werden. Damit die notwendige und angepriesene Knicksteifigkeit erreicht wird, ist die Schweißverbindung mittels entsprechend stark dimensionierter, meterlanger tragender Schweißnähte auszuführen, was einen hohen und schweißtechnisch anspruchsvollen Herstellungsaufwand bedingt.

Diese Absattelstütze weist in den vertikalen Randbereichen der Anschraubplatte beiderseits jeweils eine Lochreihe zur höhenmäßig individuellen Befestigung auf. Jede der Lochreihen besitzt daher mehr als die doppelte Anzahl der zur eigentlichen Befestigung erforderlichen Schraubenlöcher, so dass mehr als die Hälfte aller Löcher unter und/oder oberhalb der bei der Montage platzierten Befestigungsschrauben unbenutzt, d.h. frei bleiben und neben den vorderseitig sichtbar auffallenden dicken Schweißnähten das Äußere der Stütze zusätzlich negativ beeinflusst.

Der Erfindung liegt die Aufgabe zugrunde, eine Stütze für Sattelauflieger mit einem Stützenaußenrohrkörper, der möglichst keine tragende Schweißnähte besitzt zu schaffen und der konstruktiv und kostenmäßig sowie im Design optimal ist.

Es wird erfindungsgemäß vorgeschlagen, den Stützenaußenrohrkörper aus einem wannenförmigen Profil, d.h. einem U-Profil, an dessen Schenkelenden sich einstückig rechtwinklige, nach außen abstehende Flanschschenkel, die parallel zum U-Rücken stehen, herzustellen. Und lediglich die Öffnung des Wannenprofils zwischen den abstehenden Flanschschenkeln mit einem vertikal durchgehenden Rückwandblech, vorzugsweise schweißtechnisch zu schließen, damit ein Führungsschacht für das Stützeninnerohr entsteht, welches vorzugsweise aus einem handelsüblichen Quadratrohr hergestellt sein kann.

Der besondere Vorteil der sich daraus ergebenden Statik besteht darin, dass das Wannenprofil als einstückiges Tragteil das Gros aller oben genannten Beanspruchungen aufnimmt und die Kräfte, nicht mehr zuerst ungünstigerweise über die Schweißnähte in die Anschraubplatte, sondern direkt mittels der Schraubverbindung in den Sattelaufliegerrahmen einleitet. Das bedeutet, dass nur wenig beanspruchte und daher dünne Schweißnähte zur Anbringung der Rückwand erforderlich sind, die im Übrigen nach dem Stützenanbau nicht zu sehen sind.

Ein anderer Gedanke der Erfindung ist, die Schraubenlöcher bei der Herstellung noch nicht freizulegen, sondern sinnbildlich ausgedrückt, nur zu perforieren, damit diese erst beim Anbau der Stütze, je nach Erfordernis, d.h. höhenmäßiger Anordnung des Lochbildes einer mit dem Chassis des Sattelaufliegers verbundenen Schnittstelle, auszubrechen bzw. auszuschlagen sind, um die Befestigungsschrauben einführen zu können. Zwecks späterer Freimachung der Schraubenlöcher sind deren Ränder bei der Herstellung des Stützenaußenrohrkörpers stanztechnisch lediglich weitgehend einzuschneiden, was zweckmäßigerweise von der anbaumäßigen Rückseite aus erfolgen sollte. Diese Methode schafft eine hohe Flexibilität bezüglich individueller Befestigung der Stütze, ohne dass danach freie, d.h. ungenutzter Löcher in den Flanschschenkeln zu sehen sind.

Die Verwendung eines Wannenprofils bietet noch weitere konstruktive Vorteile. So kann z. B. ein Teil der Rückwand, im vertikalen Längsschnitt gesehen, im oberen Endbereich des Stützenaußenrohrkörpers derart nach hinten gekröpft sein, dass dort oberhalb des vorzugsweise quadratischen Führungskanals eine Querschnittsvergrößerung entsteht, die sich beim Einbau der Getriebeteile als vorteilhaft erweisen kann.

Oder es können bei wirtschaftlicher Weise reduzierter Wanddicke des Wannenprofils, z. B. an dessen beiden Übergängen von den U-Schenkeln zu den Flanschschenkeln Ecksicken eingeprägt werden, was bei optimalem Materialeinsatz eine Versteifung bewirkt

Vorteilhafte Ausgestaltungen der Erfindung gehen aus den Unteransprüchen hervor.

Die Erfindung wird anschließend anhand der Zeichnungen erläutert. Es zeigen:
- Fig. 1: eine Frontansicht der erfindungsgemäßen Stütze,
- Fig. 2: eine Seitenansicht der in Fig.1 gezeigten Stütze,
- Fig. 3: einen Schnitt entlang der Linie A-A in Fig.1,
- Fig. 4: einen Schnitt analog Fig.3 einer herkömmlichen Stütze und
- Fig. 5: eine Frontansicht der erfindungsgemäßen Stütze wie Fig.1, jedoch exemplarisch tiefer angebaut.

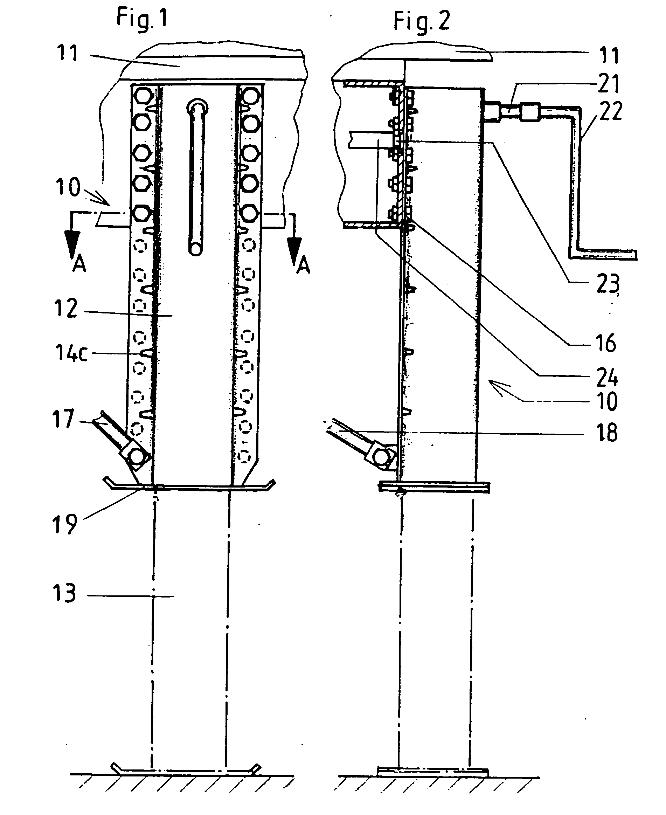

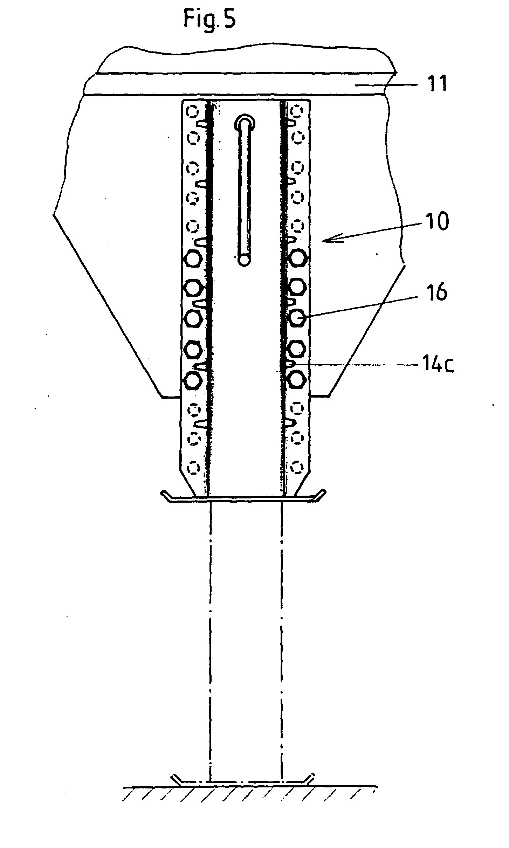

Die in Fig. 1 bis 3 und Fig. 5 gezeigte Stütze 10 wird paarweise am Chassis eines Sattelaufliegers 11 in dessen vorderen Bereich angebaut und ist in Transportstellung eingefahren, d.h. in verkürztem Zustand. Bevor der Sattelauflieger 11 vom Sattelschlepper abgekuppelt wird, werden die Stützen 10 ausgefahren.

Da die Stützen 10 eines jeden Paares im Aufbau gleich sind, wird nur eine Stütze 10 beschrieben.

Die Stütze 10 weist einen Stützenaußenrohrkörper 12 und ein darin längsverschiebbar gelagertes Stützeninnenrohr 13 auf.

Der Stützenaußenrohrkörper 12 besteht aus einem Wannenprofil 14 mit zwei gegenüberliegenden Flanschschenkeln 14a und einer Rückwand 15, die mit dem Wannenprofil 14 verschweißt ist, so dass darin ein im Querschnitt quadratischer Führungskanal besteht in den das ebenfalls quadratische Stützeninnenrohr 13 mit etwas Spiel eingelagert ist. Und das Wannenprofil 14 ist zur Versteifung mit vertikal beabstandeten Ecksicken 14c versehen.

In den Flanschschenkeln 14a ist jeweils eine vertikale Lochreihe mit stanztechnisch vorgeschnittenen Schraubenlöchern 14b vorhanden.

Die Stütze 10 wird über die Flanschschenkel 14a ihres Stützenaußenrohrkörpers 12 mittels Schrauben 16 am Sattelauflieger 11 befestigt und mit Längs- und Querstreben 17, 18 abgestrebt.

Am unteren Ende des Stützeninnenrohres 13 ist ein Fuß 19 zur Abstützung am Boden befestigt.

In die Stütze 10 ist, bei diesem Ausbildungsbeispiel der Erfindung, ein Spindeltrieb mit einer Spindel 20 eingebaut, worüber das Stützeninnenrohr 13 verstellt bzw. die Last angehoben oder abgesenkt wird.

Zu diesem Zweck ist oberhalb der Spindel 20 ein Getriebe in die Stütze 10 eingebaut, das u.a. eine Antriebswelle 21 besitzt auf der eine Handkurbel 22 sitzt und eine Abtriebswelle 23 aufweist, über die mittels einer Verbindungswelle 24 auch die gegenüber angeordnete Stütze angetrieben wird.

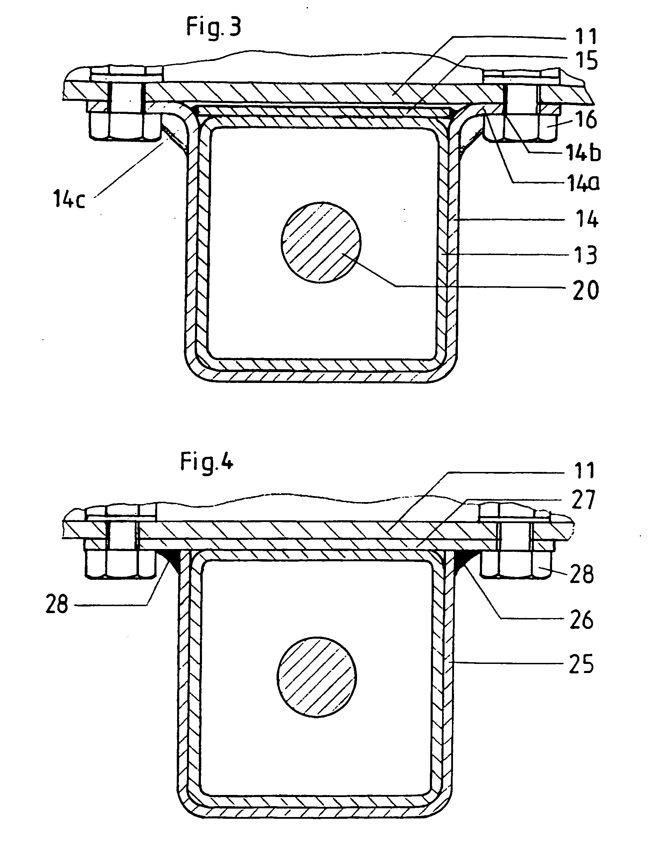

Fig.4. zeigt vergleichsweise einen Schnitt analog zu Fig.3 durch eine Stütze gemäß dem eingangs genannten Prospekt der, die bereits beschriebene, ungünstige Ausgestaltung dieser Stütze visuell verdeutlicht.

Das U-Profil 25 ist mit starken tragenden Schweißnähten 26, die unter hoher Beanspruchung im vollen Kraftfluss liegen und die gesamten Kräfte aufnehmen müssen an die Anschraubplatte 27 angeschweißt. Und erst über die Anschraubplatte 27 werden die Kräfte, mittels der Schrauben 28, in das Chassis des Sattelaufliegers 11 eingeleitet.

### Bezugszeichenliste

- **10**: Stütze
- **11**: Sattelauflieger
- **12**: Stützenaußenrohrkörper
- **13**: Stützeninnenrohr
- **14**: Wannenprofil
- **14a**: Flanschschenkel
- **14b**: Schraubenloch
- **14c**: Ecksicke
- **15**: Rückwand
- **16**: Schraube
- **17**: Längsstrebe
- **18**: Querstreben
- **19**: Fuß
- **20**: Spindel
- **21**: Antriebswelle
- **22**: Handkurbel
- **23**: Abtriebswelle
- **24**: Verbindungswelle
- **25**: U-Profil
- **26**: Schweißnaht
- **27**: Anschraubplatte
- **28**: Schraube

## Patentansprüche

1. Höhenverstellbare Stütze für Sattelauflieger oder dergleichen mit einem ortsfest angebrachten Stützenaußenrohrkörper und einem darin längsverschiebbar angeordneten Stützeninnenrohr das von einem Antriebsmechanismus auf- oder abbewegt wird, **dadurch gekennzeichnet, dass** der Stützenaußenrohrkörper (12) aus einem Wannenprofil (14), das einen u-förmigen Bereich an dessen Schenkelenden sich zwei nach außen stehende Flanschschenkel (14a), die parallel zum U-Rücken verlaufen besteht und zwischen den Flanschschenkeln (14a), mit einer vertikal durchgehenden Rückwand (15) verschlossen ist, so dass ein Führungskanal für das darin eingelagerte Stützeninnenrohr (13) besteht.

2. Stütze nach Anspruch 1, **dadurch gekennzeichnet, dass** das Wannenprofil (14) ein Pressteil ist.

3. Stütze nach Anspruch 1, **dadurch gekennzeichnet, dass** im oberen Bereich des Stützenaußenrohrkörpers (12) ein Teil der Rückwand (15) nach außen gekröpft ist, damit dort eine Querschnittserweiterung des Stützenaußenrohrkörpers (12) besteht.

4. Stütze nach Anspruch 1, **dadurch gekennzeichnet, dass** das Wannenprofil (14) örtliche Ausprägungen aufweist.

5. Stütze nach Anspruch 1, **dadurch gekennzeichnet, dass** die Rückwand (15) örtliche Ausprägungen aufweist.

6. Stütze nach Anspruch 1, **dadurch gekennzeichnet, dass** in den, den Flanschschenkeln (14a) benachbarten Kanten des Wannenprofils (14) Ecksicken (14c) zur Versteifung vorhanden sind.

7. Stütze nach Anspruch 1, **dadurch gekennzeichnet, dass** sich in den Flanschschenkeln (14a) des Wannenprofils (14) jeweils eine vertikal verlaufende Reihe Schraubenlöcher (14b) befindet.

8. Stütze nach Anspruch 6, **dadurch gekennzeichnet, dass** der Werkstoff in den Zonen der Schraubenlöcher (14b) fabrikmäßig so vorbearbeitet ist, dass durch leichtes nachtägliches Entfernen solcher Materialbereiche Schraubenlöcher (14b) entstehen.

9. Stütze nach Anspruch 7 und 8, **dadurch gekennzeichnet, dass** die Ränder der Schraubenlöcher (14b) stanztechnisch nur weitgehendst eingeschnitten sind, so dass die Schnittabfälle leicht ausgebrochen oder ausgeschlagen werden können, um die Schraubenlöcher (14b) freizulegen.

## Claims

1. Height-adjustable support for semitrailers or the like, having a stationary outer support tube body and an inner support tube, which is arranged in a longitudinally displaceable manner therein and is moved up or down by a driving mechanism, **characterized in that** the outer support tube body (12) comprises a trough-type profile (14), a U-shaped region, at the limb ends of which two outwardly projecting flange limbs (14a), which run parallel to the U-back, and is closed between the flange limbs (14a) by a vertically continuous rear wall (15), so that there is a guide channel for the inner support tube (13) mounted therein.

2. Support according to Claim 1, **characterized in that** the trough-type profile (14) is a pressed part.

3. Support according to Claim 1, **characterized in that** in the upper region of the outer support tube body (12) a part of the rear wall (15) is bent outwards, so that there is a cross-sectional expansion of the outer support tube body (12) there.

4. Support according to Claim 1, **characterized in that** the trough-type profile (14) has local configurations.

5. Support according to Claim 1, **characterized in that** the rear wall (15) has local configurations.

6. Support according to Claim 1, **characterized in that** in those edges of the trough-type profile (14) which are adjacent to the flange limbs (14a) there are corner beads (14c) for stiffening purposes.

7. Support according to Claim 1, **characterized in that** a vertically running row of screw holes (14b) is located in each case in the flange limbs (14a) of the trough-type profile (14).

8. Support according to Claim 6, **characterized in that** the material in the zones of the screw holes (14b) is premachined at the factory in such a manner that, by means of simple, retrospective removal of such material regions, screw holes (14b) are produced.

9. Support according to Claims 7 and 8, **characterized in that** the edges of the screw holes (14b) are cut in by punching but not all the way through, so that the cutting slugs can easily be broken off or knocked out in order to expose the screw holes (14b).

## Revendications

1. Support réglable en hauteur pour semi-remorques ou similaires, comprenant un corps tubulaire extérieur de support monté fixement et un tube intérieur de support disposé de manière à pouvoir coulisser dans celui-ci, qui est levé ou abaissé par un mécanisme d'entraînement, **caractérisé en ce que** le corps tubulaire extérieur de support (12) se compose d'un profilé en forme de cuve (14) qui présente une partie en forme de U au niveau des extrémités de branches de laquelle s'étendent deux branches de bride (14a) saillant vers l'extérieur, qui sont parallèles à l'âme du U, et qui est fermé entre les branches des brides (14a) avec une paroi arrière (15) continue verticale, afin qu'un conduit de guidage soit produit pour le tube intérieur de support (13) introduit.

2. Support selon la revendication 1, **caractérisé en ce que** le profilé en forme de cuve (14) est une partie pressée.

3. Support selon la revendication 1, **caractérisé en ce qu'**une partie de la paroi arrière (15) est coudée vers l'extérieur dans la région supérieure du corps tubulaire extérieur de support (12), afin qu'il se produise à cet endroit un élargissement de la section transversale du corps tubulaire extérieur de support (12).

4. Support selon la revendication 1, **caractérisé en ce que** le profilé en forme de cuve (14) présente des impressions locales.

5. Support selon la revendication 1, **caractérisé en ce que** la paroi arrière (15) présente des impressions locales.

6. Support selon la revendication 1, **caractérisé en ce que** des moulures de coin (14c) de renforcement sont prévues dans les arêtes du profilé en forme de cuve (14) voisines des branches des brides (14a).

7. Support selon la revendication 1, **caractérisé en ce qu'**une rangée de trous de vis (14b) s'étendant verticalement est à chaque fois prévue dans les branches de brides (14a) du profilé en forme de cuve (14).

8. Support selon la revendication 6, **caractérisé en ce que** le matériau dans les zones des trous de vis (14b) est pré-usiné en usine de telle sorte que par un enlèvement ultérieur aisé de ces zones de matériau, on forme des trous de vis (14b).

9. Support selon la revendication 7 et 8, **caractérisé en ce que** les bords des trous de vis (14b) sont découpés par une technique d'estampage uniquement le plus possible pour que les résidus de coupe puissent être aisément cassés ou enfoncés afin d'exposer les trous de vis (14b).
